(19) Europäisches Patentamt
European Patent Office
Office européen des brevets

(11) EP 4 070 870 A1

(12) EUROPEAN PATENT APPLICATION
published in accordance with Art. 153(4) EPC

(43) Date of publication:
**12.10.2022 Bulletin 2022/41**

(21) Application number: **20895002.2**

(22) Date of filing: **04.12.2020**

(51) International Patent Classification (IPC):
***B01D 21/01*** (2006.01) ***C08F 220/34*** (2006.01)
***C08F 220/56*** (2006.01) ***C08F 220/60*** (2006.01)
***C02F 11/147*** (2019.01)

(52) Cooperative Patent Classification (CPC):
**B01D 21/01; C02F 11/147; C08F 220/34; C08F 220/56; C08F 220/60**

(86) International application number:
**PCT/JP2020/045234**

(87) International publication number:
**WO 2021/112219 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.12.2019 JP 2019221221**

(71) Applicant: **Kurita Water Industries Ltd.**
**Tokyo 164-0001 (JP)**

(72) Inventors:
- **SAKAMOTO Ayako**
  **Tokyo 164-0001 (JP)**
- **SATO Shigeru**
  **Tokyo 164-0001 (JP)**
- **WATANABE Kazuya**
  **Tokyo 164-0001 (JP)**
- **MASUI Yukihito**
  **Tokyo 164-0001 (JP)**

(74) Representative: **Becker, Eberhard**
**Becker Kurig & Partner**
**Patentanwälte mbB**
**Bavariastraße 7**
**80336 München (DE)**

# (54) SLUDGE DEHYDRATING AGENT AND SLUDGE DEHYDRATION METHOD

(57) The present invention pertains to a sludge dehydrating agent containing a cationic polymer having a structural unit a that is derived from a primary amine salt having a specific structure and a structural unit b that is derived from a quaternary ammonium salt having a specific structure. The intrinsic viscosity of a 1 mol/L sodium nitrate solution of the cationic polymer is 0.5-4.5 dL/g at 30°C.

EP 4 070 870 A1

## Description

### Technical Field

The present invention relates to a sludge dehydrating agent and a sludge dehydrating method.
This application is based upon and claims the benefit of priority of the prior Japanese Patent Application No. 2019-221221 filed in Japan on December 6, 2019, the entire contents of which are incorporated herein by reference.

### Related Art

Sludge dehydrating agents are used for dehydrating sludge mainly composed of excess sludge generated in food factories, chemical factories, excreta treatment plants and the like. As for sludge dehydrating agents, cationic polymer flocculants are generally used. The cationic polymer flocculant may be, for example, dimethylaminoethyl (meth)acrylate or methyl chloride quaternary product thereof. In recent years, with the diversification of sludge such as an increase of excess sludge and changes in properties of sludge, sludge that is difficult to dehydrate has also increased, and sludge dehydrating agents that are superior in dehydrating performance such as gravity filterability are required.
In order to further improve the dehydrating performance, for example, Patent Literature 1 proposes a polymer flocculant containing a water-soluble polymer having a specific cationic degree and a specific intrinsic viscosity. Patent Literature 2 proposes an organic coagulant containing a primary amine base-containing polymer containing an unsaturated monomer having a specific structure as a constitutional unit. Citation List

### Patent Literature

Patent Literature 1: Japanese Patent Laid-Open No. 2015-57275
Patent Literature 2: Japanese Patent Laid-Open No. 2013-154287

## SUMMARY OF INVENTION

### Technical Problem

However, in the techniques of Patent Literatures 1 and 2, aggregated floes obtained from sludge tend to be large and are likely to contain a large amount of water. Therefore, the percentage of water content in the dehydrated cake obtained by dehydrating treatment and solid-liquid separation is less likely to decrease, and the dehydrating treatment is not sufficiently satisfactory.
Thus, an object of the present invention is to provide a sludge dehydrating agent superior in dehydrating performance and a sludge dehydrating method using the sludge dehydrating agent. Solution to Problem
As a result of diligent studies, the present inventors have found out that a sludge dehydrating agent, which has favorable water filtering property and can further decrease the percentage of water content in the dehydrated cake, is obtained by using a primary amine base-containing monomer having a specific structure and crosslinking a polymer, and thus completed the present invention.
That is, the present invention has the following aspects.

[1] A sludge dehydrating agent, including a cationic polymer which has: a constitutional unit a derived from a primary amine salt represented by the following Formula (a1); and a constitutional unit b derived from a quaternary ammonium salt represented by the following Formula (b1), where an intrinsic viscosity of the cationic polymer at 30°C in a 1 mol/L sodium nitrate aqueous solution is 0.5 to 4.5 dL/g:

[Chem. 1]

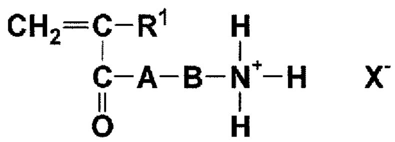

・・・(a 1)

(in Formula (a1), $R^1$ is a hydrogen atom or a methyl group, A is an oxygen atom or $-NR^9-$, where $R^9$ is a hydrogen

atom or an alkyl group having 1 to 3 carbon atoms, B is an alkylene group having 2 to 4 carbon atoms, and $X^-$ is an anion),

[Chem. 2]

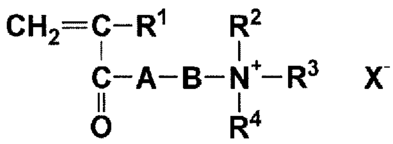

· · · (b 1)

(in Formula (b1), $R^1$ is a hydrogen atom or a methyl group, $R^2$ and $R^4$ are each independently an alkyl group having 1 to 3 carbon atoms, $R^3$ is a hydrogen atom, an alkyl group having 1 to 3 carbon atoms, or a benzyl group, A is an oxygen atom or $-NR^9-$, where $R^9$ is a hydrogen atom or an alkyl group having 1 to 3 carbon atoms, B is an alkylene group having 2 to 4 carbon atoms, and $X^-$ is an anion).

[2] The sludge dehydrating agent according to [1], where a sum of the constitutional unit a and the constitutional unit b is 50 mol% or more and 100 mol% or less with respect to 100 mol% of a sum of monomer units that are constitutional units of the cationic polymer.

[3] The sludge dehydrating agent according to [1] or [2], where the cationic polymer further has a constitutional unit c derived from a nonionic monomer.

[4] The sludge dehydrating agent according to [3], where the constitutional unit a is 10 mol% or more and less than 100 mol% with respect to 100 mol% of a sum of monomer units that are constitutional units of the cationic polymer, the constitutional unit b is more than 0 mol% and 60 mol% or less with respect to 100 mol% of a sum of monomer units that are constitutional units of the cationic polymer, and the constitutional unit c is more than 0 mol% and 50 mol% or less with respect to 100 mol% of a sum of monomer units that are constitutional units of the cationic polymer.

[5] The sludge dehydrating agent according to any one of [1] to [4], which includes a crosslinking agent, where an amount of the crosslinking agent added is 0.001 mol% or more and 1 mol% or less with respect to 100 mol% of a sum of monomer units that are constitutional units of the cationic polymer.

[6] A sludge dehydrating method, in which the sludge dehydrating agent according to any one of [1] to [5] is added to sludge, to dehydrate the sludge.

Effects of Invention

According to the sludge dehydrating agent and sludge dehydrating method of the present invention, the dehydrating performance is superior.

DESCRIPTION OF EMBODIMENTS

Hereinafter, the sludge dehydrating agent and the sludge dehydrating method using the sludge dehydrating agent of the present invention will be described in detail.

It should be noted that, in the specification, the term "(meth)acrylic" means acrylic and/or methacrylic. The same applies to the terms "(meth)acrylate" and "(meth)acryloyl".

[Sludge dehydrating agent]

The sludge dehydrating agent of the present invention contains a cationic polymer having a constitutional unit a and a constitutional unit b.

«Cationic polymer»

In the specification, the term "cationic polymer" refers to a polymer in which with respect to 100 mol% of the sum of monomer units constituting the polymer, the total molar quantity of cationic monomer units and nonionic monomer units is 92 mol% or more. In the cationic polymer, the molar quantity of cationic monomer units is preferably 50 mol% or more with respect to 100 mol% of the sum of monomer units constituting the polymer. In the cationic polymer, the total molar quantity of cationic monomer units and nonionic monomer units is 92 mol% or more, preferably 95 mol% or more, and more preferably 97 mol% or more, and may be 100 mol% with respect to 100 mol% of the sum of monomer units constituting the polymer. When the total molar quantity of cationic monomer units and nonionic monomer units is equal to or more than the lower limit value, the power for neutralizing the charge of negatively charged sludge particles

is high, and the polymer firmly adsorbs the sludge particles, thus making it easier to enhance the dehydrating performance.

In addition, in the cationic polymer, the molar quantity of anionic monomer units is 8 mol% or less, preferably 5 mol% or less, and more preferably 3 mol% or less, and may be 0 mol% with respect to 100 mol% of the sum of monomer units constituting the polymer. When the molar quantity of anionic monomer units is less than or equal to the upper limit value, it is easier to enhance the dehydrating performance.

It should be noted that, in the specification, the compounding composition ratio among the monomers at the time of polymerization of the cationic polymer is regarded as the composition ratio among the constitutional units of the cationic polymer.

The intrinsic viscosity of the cationic polymer according to the embodiment at 30°C in a 1 mol/L sodium nitrate aqueous solution is 0.5 to 4.5 dL/g. The intrinsic viscosity of the cationic polymer at 30°C in a 1 mol/L sodium nitrate aqueous solution is preferably 1.0 to 4.0 dL/g, and more preferably 1.5 to 3.5 dL/g. When the intrinsic viscosity of the cationic polymer at 30°C in a 1 mol/L sodium nitrate aqueous solution is within the above numerical range, it is easier to enhance the water filtering property of the sludge dehydrating agent and further enhance the dehydrating performance.

The intrinsic viscosity is a polymer physical property that is an index of the degree of spreading and shrinkage of polymer chain. The intrinsic viscosity is also an index of molecular weight, and the intrinsic viscosity tends to be higher as the molecular weight of polymer is larger. However, the intrinsic viscosity is also affected by the structure of a monomer which is a monomer unit constituting a polymer, the polymerization conditions and the like, and thus does not always indicate the direct correlation with the molecular weight.

The intrinsic viscosity is denoted by [η] and is a value calculated by using the Huggins Equation represented by the following Equation (I).

$$\eta_{SP}/C = [\eta] + k'[\eta]2C \ldots (I)$$

In Equation (I), $\eta_{SP}$: specific viscosity (= $\eta_{rel}$ - 1), k': Huggins constant, C: polymer solution concentration, and $\eta_{rel}$: relative viscosity.

The Huggins constant k' is a constant determined by the kind of polymer and the kind of solvent. The Huggins constant k' can be determined as a slope when a graph is plotted with $\eta_{SP}/C$ on the vertical axis and C on the horizontal axis. Specifically, solutions of cationic polymers having different concentrations are prepared, the specific viscosities $\eta_{SP}$ of the solutions having different concentrations are determined, the relation between $\eta_{SP}/C$ and C is plotted, and the value of the intercept with C extrapolated to 0 is the intrinsic viscosity [η].

The specific viscosity $\eta_{SP}$ is determined by a method shown in Examples described later.

<Cationic monomer>

The cationic polymer according to the embodiment is a polymer having a constitutional unit a and a constitutional unit b.

The constitutional unit a and the constitutional unit b are constitutional units derived from cationic monomers. In the specification, the term "cationic monomer" refers to a cationic monomer that has a cationic functional group but does not have an anionic functional group. The cationic functional group may be, for example, a functional group such as an amino group.

It should be noted that, a functional group that does not exhibit cationicity in a monomer does not fall under the cationic functional group. For example, with regard to acrylamide, which is a nonionic monomer described later, the amino group contained in the amide group does not exhibit the cationicity, and thus does not fall under the cationic functional group.

(Constitutional unit a)

The constitutional unit a is a constitutional unit derived from a primary amine salt represented by the following Formula (al). That is, the constitutional unit a is a monomer unit represented by the following Formula (a2).

[Chem. 3]

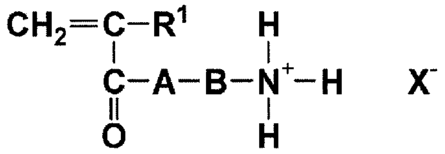

· · · (a 1)

[Chem. 4]

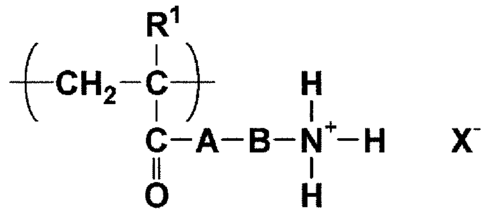

· · · (a 2)

In Formulas (al) and (a2), $R^1$ is a hydrogen atom or a methyl group, and preferably a methyl group.

A is an oxygen atom or $-NR^9-$, where $R^9$ is a hydrogen atom or an alkyl group having 1 to 3 carbon atoms, and A is preferably an oxygen atom. B is an alkylene group having 2 to 4 carbon atoms, and preferably an ethylene group. $X^-$ is an anion, and preferably a chloride ion, a bromide ion, an iodide ion, $1/2(SO_4^{2-})$, $HSO_4^-$ or $CH_3SO_4^-$. It should be noted that, when $X^-$ is $1/2(SO_4^{2-})$, two cation moieties in Formula (a1), or one cation moiety in Formula (a1) and one cation moiety in Formula (b1) bond with $(SO_4^{2-})$ that is a divalent anion to form a dimer.

The compound represented by Formula (al) may be, for example, an inorganic acid or organic acid salt of 2-aminoethyl acrylate, 2-aminoethyl methacrylate, 3-aminopropyl acrylate, 3-aminopropyl methacrylate or the like. One kind of these may be used alone, or two or more kinds thereof may be used in combination.

As the compound represented by Formula (a1), from the viewpoints of polymerizability, sludge dehydrating performance and the like, an inorganic acid salt of 2-aminoethyl acrylate and an inorganic acid salt of 2-aminoethyl methacrylate are preferable, 2-aminoethyl acrylate hydrochloride, 2-aminoethyl acrylate sulfate, 2-aminoethyl methacrylate hydrochloride, and 2-aminoethyl methacrylate sulfate are more preferable, and 2-aminoethyl methacrylate hydrochloride is further preferable.

The constitutional unit a is preferably 10 mol% or more and less than 100 mol%, more preferably 10 mol% or more and 80 mol% or less, and further preferably 10 mol% or more and 50 mol% or less with respect to 100 mol% of the sum of monomer units that are constitutional units of the cationic polymer. When the constitutional unit a is within the above numerical range, it is easier to enhance the dehydrating performance of the sludge dehydrating agent.

(Constitutional unit b)

The cationic polymer according to the embodiment preferably has the constitutional unit b. As the cationic polymer has the constitutional unit b, it is easier to enhance the dehydrating performance of the sludge dehydrating agent.

The constitutional unit b is a constitutional unit derived from a quaternary ammonium salt represented by the following Formula (b1). That is, the constitutional unit b is a monomer unit represented by the following Formula (b2).

[Chem. 5]

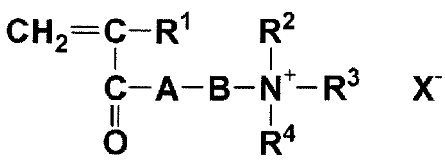

· · · (b 1)

[Chem. 6]

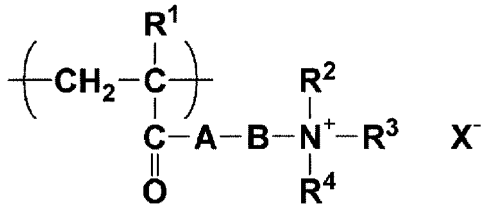

· · · (b 2)

In Formula (b1) and Formula (b2), $R^1$ is a hydrogen atom or a methyl group. $R^2$ and $R^4$ are each independently an alkyl group having 1 to 3 carbon atoms. $R^3$ is a hydrogen atom, an alkyl group having 1 to 3 carbon atoms, or a benzyl group, and preferably an alkyl group having 1 to 3 carbon atoms.

A is an oxygen atom or $-NR^9-$, where $R^9$ is a hydrogen atom or an alkyl group having 1 to 3 carbon atoms, and A is preferably an oxygen atom. B is an alkylene group having 2 to 4 carbon atoms, and preferably an ethylene group. $X^-$ is an anion, and preferably a chloride ion, a bromide ion, an iodide ion, $1/2(SO_4^{2-})$, $HSO_4^-$ or $CH_3SO_4^-$. It should be noted that, when $X^-$ is $1/2(SO_4^{2-})$, two cation moieties in Formula (b1), or one cation moiety in Formula (b1) and one cation moiety in Formula (a1) bond with $(SO_4^{2-})$ that is a divalent anion to form a dimer.

The compound represented by Formula (b1) may be, for example, 2-(acryloyloxy)ethyltrimethylammonium salt, 2-(methacryloyloxy)ethyltrimethylammonium salt, 2-(acryloyloxy)ethyldimethylamine salt, 2-(methacryloyloxy)ethyldimethylamine salt, 2-(acryloyloxy)ethyldimethylbenzylammonium salt, 2-(methacryloyloxy)ethyldimethylbenzylammonium salt, or the like. One kind of these may be used alone, or two or more kinds thereof may be used in combination.

As the compound represented by Formula (b1), from the viewpoints of polymerizability, sludge dehydrating performance and the like, 2-(acryloyloxy)ethyltrimethylammonium salt and 2-(methacryloyloxy)ethyltrimethylammonium salt are preferable, 2-(acryloyloxy)ethyltrimethylammonium hydrochloride, 2-(acryloyloxy)ethyltrimethylammonium sulfate, 2-(methacryloyloxy)ethyltrimethylammonium hydrochloride, and 2-(methacryloyloxy)ethyltrimethylammonium sulfate are more preferable, and 2-(acryloyloxy)ethyltrimethylammonium hydrochloride and 2-(methacryloyloxy)ethyltrimethylammonium hydrochloride are further preferable.

The constitutional unit b is preferably more than 0 mol% and 60 mol% or less, more preferably 10 mol% or more and 60 mol% or less, further preferably 20 mol% or more and 60 mol% or less, and further preferably 20 mol% or more and 55 mol% or less with respect to 100 mol% of the sum of monomer units that are constitutional units of the cationic polymer. When the constitutional unit b is within the above numerical range, it is easier to enhance the dehydrating performance of the sludge dehydrating agent.

The sum of the constitutional unit a and the constitutional unit b is preferably 50 mol% or more, more preferably 55 mol% or more, and further preferably 60 mol% or more with respect to 100 mol% of the sum of monomer units that are constitutional units of the cationic polymer. When the sum of the constitutional unit a and the constitutional unit b is equal to or more than the lower limit value, it is easier to enhance the dehydrating performance of the sludge dehydrating agent. The upper limit value of the sum of the constitutional unit a and the constitutional unit b is preferably, for example, 90 mol%.

It should be noted that, the sum of the constitutional unit a and the constitutional unit b shall be 100 mol% or less with respect to 100 mol% of the sum of monomer units that are constitutional units of the cationic polymer.

<Nonionic monomer>

(Constitutional unit c)

The cationic polymer according to the embodiment may alternatively have a constitutional unit c derived from a nonionic monomer. As the cationic polymer has the constitutional unit c, it is easier to enhance the dehydrating performance of the sludge dehydrating agent. In the specification, the term "nonionic monomer" refers to an electrically neutral (nonionic) monomer, which does not have a cationic functional group or an anionic functional group.

The nonionic monomer may be, for example, amides such as (meth)acrylamide and N,N-dimethyl (meth)acrylamide; a vinyl cyanide-based compound such as (meth)acrylonitrile; (meth)acrylic acid alkyl esters such as methyl (meth)acrylate and ethyl (meth)acrylate; vinyl esters such as vinyl acetate and the like; an aromatic vinyl-based compound such as styrene, $\alpha$-methylstyrene, or p-methylstyrene; or the like. One kind of these may be used alone, or two or more kinds thereof may be used in combination.

Among the nonionic monomers, in terms of water solubility being excellent, the adjustment of the monomer

composition ratio in the cationic polymer being easy, the achievement of favorable sludge dehydrating performance being easy, and the like, amides are preferable, (meth)acrylamide is more preferable, and acrylamide is further preferable.

In a case where the cationic polymer has the constitutional unit c, the constitutional unit c is preferably more than 0 mol% and 50 mol% or less, more preferably 1 mol% or more and 50 mol% or less, further preferably 5 mol% or more and 50 mol% or less, and particularly preferably 10 mol% or more and 40 mol% or less with respect to 100 mol% of the sum of monomer units that are constitutional units of the cationic polymer. When the constitutional unit c is within the above numerical range, it is easier to enhance the dehydrating performance of the sludge dehydrating agent.

In a case where the cationic polymer has the constitutional unit c, the sum of the constitutional unit a, the constitutional unit b, and the constitutional unit c is preferably 92 mol% or more, more preferably 95 mol% or more, and further preferably 97 mol% or more, and may be 100 mol% with respect to 100 mol% of the sum of monomer units that are constitutional units of the cationic polymer. When the sum of the constitutional unit a, the constitutional unit b, and the constitutional unit c is equal to or more than the lower limit value, it is easier to enhance the dehydrating performance of the sludge dehydrating agent.

It should be noted that, the sum of the constitutional unit a, the constitutional unit b, and the constitutional unit c shall be 100 mol% or less with respect to 100 mol% of the sum of monomer units that are constitutional units of the cationic polymer.

<Anionic monomer>

The cationic polymer according to the embodiment may alternatively have a constitutional unit derived from an anionic monomer. In the specification, the term "anionic monomer" refers to an anionic monomer that has an anionic functional group but does not have a cationic functional group. The anionic functional group may be, for example, a carboxyl group, a sulfonic acid group, a phosphoric acid group, or the like.

It should be noted that, a functional group that does not exhibit anionicity in a monomer does not fall under the anionic functional group.

The anionic monomer may be, for example, vinylsulfonic acid, vinylbenzenesulfonic acid, 2-acrylamide-2-methylpropanesulfonic acid, (meth)acrylic acid, itaconic acid, maleic acid, alkali metal salts thereof, or the like. One kind of these may be used alone, or two or more kinds thereof may be used in combination.

In the cationic polymer according to the embodiment, in 100 mol% of the sum of monomer units that are constitutional units of the cationic polymer, the constitutional unit derived from an anionic monomer is 8 mol% or less, preferably 5 mol% or less, and more preferably 3 mol% or less, and may be 0 mol%. When the constitutional unit derived from an anionic monomer is equal to or more than the upper limit value, the charge neutralizing power is lowered and the dehydrating performance is likely to decrease.

It should be noted that, the sum of the constitutional unit derived from a cationic monomer, the constitutional unit derived from a nonionic monomer, and the constitutional unit derived from an anionic monomer shall be 100 mol% or less with respect to 100 mol% of the sum of monomer units that are constitutional units of the cationic polymer.

<Other monomers>

The cationic polymer according to the embodiment may alternatively have a constitutional unit derived from another cationic monomer other than the compounds represented by Formulas (al) and (b1). The constitutional unit derived from another cationic monomer may be, for example, a constitutional unit derived from a secondary amine salt, a constitutional unit derived from a tertiary amine salt, or the like.

It is preferable that the cationic polymer according to the embodiment is a crosslinked polymer of cationic monomer units or a crosslinked copolymer of a cationic monomer unit and a nonionic monomer unit. In addition, in the crosslinked copolymer, in 100 mol% of the sum of monomer units that are constitutional units of the cationic polymer, the total amount of the constitutional units derived from cationic monomers is preferably 60 mol% or more, more preferably 70 to 95 mol%, and further preferably 75 to 90 mol%.

When the cationic polymer is this crosslinked polymer having a constitutional unit derived from a cationic monomer, it is easy to obtain a cationic polymer of which the intrinsic viscosity at 30°C in a 1 mol/L sodium nitrate aqueous solution is 0.5 to 4.5 dL/g.

This cationic polymer is crosslinked, thus being less likely to shrink, having favorable water filtering property, and being capable of further decreasing the percentage of water content in the dehydrated cake. Additionally, it is considered that the power for adsorbing sludge substances is further enhanced as the cationic polymer has the constitutional unit a derived from a primary amine salt.

As the cationic polymer contained in the sludge dehydrating agent, one kind may be used alone, or two or more kinds may be used in combination. For example, in the case of two kinds of polymers, a one-agent type may be produced in which the respective polymers are mixed together, or a two-agent type may be produced in which the respective

polymers are prepared as separate liquid agents and the like and used in combination at the time of use.

The content of the cationic polymer contained in the sludge dehydrating agent is preferably 30% by mass or more, more preferably 35% by mass or more, and further preferably 40% by mass or more with respect to 100% by mass of the sludge dehydrating agent. When the content of the cationic polymer contained in the sludge dehydrating agent is equal to or more than the lower limit value, the mechanical strength of the aggregated flocs increases and it is easier to decrease the percentage of water content in the dehydrated cake. Additionally, when the content of the cationic polymer contained in the sludge dehydrating agent is equal to or more than the lower limit value, the amount of the sludge dehydrating agent added to the sludge can be decreased. The upper limit of the content of the cationic polymer contained in the sludge dehydrating agent is not particularly limited and may be, for example, 60% by mass, 55% by mass, or 45% by mass with respect to 100% by mass of the sludge dehydrating agent. That is, the content of the cationic polymer contained in the sludge dehydrating agent is preferably 30% by mass or more and 60% by mass or less, more preferably 35% by mass or more and 60% by mass or less, and further preferably 40% by mass or more and 60% by mass or less with respect to 100% by mass of the sludge dehydrating agent. Alternatively, the content of the cationic polymer contained in the sludge dehydrating agent is preferably 30% by mass or more and 55% by mass or less, more preferably 35% by mass or more and 55% by mass or less, and further preferably 40% by mass or more and 55% by mass or less with respect to 100% by mass of the sludge dehydrating agent. Alternatively, the content of the cationic polymer contained in the sludge dehydrating agent is preferably 30% by mass or more and 45% by mass or less, more preferably 35% by mass or more and 45% by mass or less, and further preferably 40% by mass or more and 45% by mass or less with respect to 100% by mass of the sludge dehydrating agent.

The sludge dehydrating agent may alternatively contain other components other than the cationic polymer as long as the effects of the present invention are not impaired. The other components may be, for example, additives such as sulfamic acid, sodium sulfate, and sodium hydrogen sulfate; solvents; and the like.

The content of additives is preferably 10% by mass or less, more preferably 5% by mass or less, and most preferably 0% by mass with respect to the total mass of the sludge dehydrating agent. In addition, the sludge dehydrating agent of the present invention may alternatively be in the form of a W/O emulsion type polymer obtained by an emulsion polymerization method described later.

[Method for producing sludge dehydrating agent]

The sludge dehydrating agent is obtained by dispersing a cationic polymer in the above-mentioned solvent.

Hereinafter, a method for producing a cationic polymer will be described.

«Method for producing cationic polymer»

A cationic polymer can be produced by polymerizing monomers that are constitutional units of the cationic polymer using a polymerization initiator and a crosslinking agent.

<Polymerization initiator>

The polymerization initiator used in the polymerization of cationic polymer may be, for example, a persulfate such as ammonium persulfate or potassium persulfate; an organic oxide such as benzoyl peroxide; an azo compound such as azobisisobutyronitrile, azobiscyanovaleric acid, 2,2'-azobis(2-amidinopropane) dihydrochloride, 2,2'-azobis(2,4-dimethylvaleronitrile), 2,2'-azobis(4-methoxy-2,4-dimethylvaleronitrile), 2,2'-azobis(2-methylamidinopropane) dihydrochloride, 2,2'-azobis(2-methylpropionamidine) dihydrochloride, or 2,2'-azobis[2-(2-imidazolin-2-yl)propane] dihydrochloride; or the like. One kind of these may be used alone, or two or more kinds thereof may be used in combination.

The amount of the polymerization initiator added can be appropriately adjusted according to the composition of monomers that are constitutional units of the cationic polymer. The amount of the polymerization initiator added is preferably 0.01 to 0.5 parts by mass with respect to 100 parts by mass of the total mass of monomers that are constitutional units of the cationic polymer.

<Crosslinking agent>

The cationic polymer according to the embodiment is produced by using a crosslinking agent at the time of polymerization.

The crosslinking agent may be, for example, N,N'-methylenebis(meth)acrylamide, triallylamine, ethylene glycol di(meth)acrylate, polyethylene glycol di(meth)acrylate, 1,3-butylene glycol di(meth)acrylate, triallylamine, ethoxylated isocyanuric acid tri(meth)acrylate, or the like. One kind of these may be used alone, or two or more kinds thereof may be used in combination. Among these crosslinking agents, in terms of easily adjusting the intrinsic viscosity of the

obtained cationic polymer within a predetermined numerical range, N,N'-methylenebis(meth)acrylamide, triallylamine, and ethoxylated isocyanuric acid tri(meth)acrylate are preferable; N,N'-methylenebisacrylamide, triallylamine, and ethoxylated isocyanuric acid triacrylate are more preferable; and N,N'-methylenebisacrylamide is further preferable.

It should be noted that, the monomers that are constitutional units of the cationic polymer according to the embodiment do not include the crosslinking agent.

The amount of the crosslinking agent added can be appropriately adjusted according to the desired intrinsic viscosity of the cationic polymer. The amount of the crosslinking agent added is preferably 0.001 to 1 mol%, more preferably 0.001 to 0.1 mol%, and further preferably 0.002 to 0.1 mol% with respect to 100 mol% of the sum of monomers that are constitutional units of the cationic polymer. When the amount of the crosslinking agent added is equal to or more than the lower limit value, it is even easier to enhance the dehydrating performance of the sludge dehydrating agent. When the amount of the crosslinking agent added is less than or equal to the upper limit value, it is easier to enhance the water filtering property of the sludge dehydrating agent.

(Polymerization method)

The aspect of polymerization method may be, for example, an emulsion polymerization method, an aqueous solution polymerization method, a suspension polymerization method, or the like. Among these polymerization methods, from the viewpoints of ease of production, ease of handling of the produced cationic polymer as a sludge dehydrating agent, solubility in sludge, and the like, an emulsion polymerization method in which a cationic polymer is obtained in a W/O emulsion type is preferable.

As the emulsion polymerization method, a known method can be used. In the emulsion polymerization method, for example, an oil phase containing an oily solvent and a surfactant is prepared, an aqueous solution of monomers that are constitutional units of the cationic polymer is added to the oil phase, stirring and mixing are performed for emulsification, and polymerization is performed. The polymerization initiator may be mixed with the aqueous solution of monomers in the case of being water-soluble, or the polymerization initiator may be added after emulsification in the case of being oil-soluble.

As the oily solvent, for example, mineral oils such as kerosene and light oil and refined products thereof such as normal paraffin, isoparaffin, and naphthenic oil may be used. Alternatively, synthetic oils, vegetable oils, or animal oils having the same properties as the mineral oils and the refined products, or mixtures thereof may be used.

As an example of the surfactant, a nonionic surfactant is suitably used, for example, a sorbitan fatty acid ester such as sorbitan monooleate or sorbitan monostearate; a polyoxyethylene alkyl ether such as polyoxyethylene lauryl ether or pentaoxyethylene oleyl ether; or the like.

The W/O emulsion type polymer obtained as described above can be diluted with water and a sodium nitrate aqueous solution having a predetermined concentration to prepare a polymer solution sample to be used in the measurement of intrinsic viscosity. In this way, the W/O emulsion type polymer does not require post-treatment such as purification of the cationic polymer after polymerization, and thus the operation of polymer production can be simplified.

It should be noted that, the W/O emulsion type polymer is obtained in a state of containing the oily solvent, but the polymer solution sample to be used in the measurement of intrinsic viscosity is prepared by diluting the polymer with a large amount of water and a sodium nitrate aqueous solution, and thus the presence of the oily solvent can be ignored. Therefore, the intrinsic viscosity of the W/O emulsion type polymer can also be regarded as the intrinsic viscosity of the cationic polymer measured using a sodium nitrate aqueous solution as a solvent.

The operation becomes complicated when the produced cationic polymer is prepared in a solid form through post-treatment such as drying and crushing and then the cationic polymer is dissolved to prepare a solution for the measurement of intrinsic viscosity. Additionally, in some cases, the rigidity of the cationic polymer changes due to heating at the time of post-treatment, shearing at the time of crushing, and the like, and a cationic polymer having a desired intrinsic viscosity is not stably obtained. For this reason, from the practical point of view of the sludge dehydrating agent that is used by being added to sludge in a liquid form as well, it is preferable that the cationic polymer is of a W/O emulsion type that can be quickly and simply prepared as a sludge dehydrating agent by being diluted with water.

[Sludge dehydrating method]

The sludge dehydrating method of the present invention (that is, the method for using the sludge dehydrating agent of the present invention) is a method in which the sludge dehydrating agent is added to sludge to dehydrate the sludge.

Sludge to which the sludge dehydrating method is applied may be, for example, excess sludge of sewage; mixed raw sludge; digested sludge; excess sludge and solidified, precipitated, and mixed sludge from food factories, chemical factories, and the like; mixed sludge from excreta treatment plants; or the like.

According to the sludge dehydrating method using the sludge dehydrating agent of the present invention,

dehydrating treatment can be stably and efficiently performed on various kinds of sludge.

For example, in a case where the content of suspended solids (SS) in sludge is about 0.4% to 4.0% by mass, the amount of the sludge dehydrating agent added is preferably 20 to 1600 mg/L, more preferably 30 to 1200 mg/L, and further preferably 50 to 800 mg/L.

It should be noted that, the content of SS referred to herein is a value determined by an analysis method described in the following Examples.

The method of adding the sludge dehydrating agent to sludge is not particularly limited, and a known method can be applied. For example, the sludge dehydrating agent can be added to sludge after being diluted with a solvent such as water so that the cationic polymer in the sludge dehydrating agent has a predetermined concentration.

From the viewpoint such as uniformly dispersing the cationic polymer in sludge, the concentration of the cationic polymer in the added liquid when the sludge dehydrating agent is added is preferably 0.01% to 1.0% by mass, more preferably 0.03% to 0.6% by mass, and further preferably 0.05% to 0.4% by mass.

Aggregated flocs can be formed by stirring the sludge to which the sludge dehydrating agent has been added, for example, in a flocculation reaction tank using a stirring blade under predetermined stirring conditions (for example, at 180 rpm for 30 seconds).

Then, the aggregated flocs are dehydrated using a dehydrating machine and separated into solid and liquid to obtain a dehydrated cake.

The dehydrating machine is not particularly limited and may be, for example, a belt press filter, a screw press dehydrating machine, a multiple-disc type dehydrating machine, a centrifugal dehydrating machine, or the like.

The dehydrated cake may be disposed of in landfills, or reused as horticultural soil or a raw material for cement.

From the viewpoint of making the dehydrated cake easy to handle in transportation, disposal, reuse processing and the like, it is preferable that the dehydrated cake does not lose the massive cake shape and contains as little water as possible. According to the sludge dehydrating method of the present invention, a dehydrated cake having this favorable handleability can be obtained.

In the sludge dehydrating method of the present invention, the floc forming power is increased and the gravity filterability is enhanced by using the sludge dehydrating agent of the present invention. For this reason, dehydrating treatment can be stably and efficiently performed on various kinds of sludge.

In the sludge dehydrating method of the present invention, other sludge dehydrating agents containing polymers different from the cationic polymer of the present invention may be used in combination with the sludge dehydrating agent of the present invention. The polymers in the above-mentioned other sludge dehydrating agents used in combination with the sludge dehydrating agent of the present invention may be, for example, a polymer having a cationic functional group, an anionic polymer, or the like. The polymer having a cationic functional group includes not only a cationic polymer but also an amphoteric polymer.

It is preferable that the above-mentioned other sludge dehydrating agents are also added by the same adding method as in the addition of the sludge dehydrating agent of the present invention. Examples

Hereinafter, the present invention will be described based on Examples, but the present invention is not limited to the following Examples.

Various polymers were prepared as cationic polymers, and evaluation tests of sludge dehydrating agent samples using those polymers were performed.

[Preparation of polymer]

Various polymers used in the sludge dehydrating agent samples of the following Examples and Comparative Examples were prepared by the respective Synthesis Examples described below or as commercially available products.

Constitutional monomers in various polymers are respectively abbreviated as follows.

- DAM1: 2-aminoethyl methacrylate hydrochloride; molecular weight 165.6.
- DAA4: 2-(acryloyloxy)ethyltrimethylammonium chloride; molecular weight 193.7.
- DAM4: 2-(methacryloyloxy)ethyltrimethylammonium chloride; molecular weight 207.7.
- AAM: acrylamide; molecular weight 71.1.
- AA: acrylic acid; molecular weight 72.1.

(Synthesis Example 1)

301 g of normal paraffin, 40 g of pentaoxyethylene oleyl alcohol ether, and 12 g of sorbitan monooleate were added into a 1 L four-neck separable flask equipped with a stirrer, a cooling tube, a nitrogen introduction tube and a thermometer, and mixed by stirring to prepare an oil phase mixture.

Next, a mixed aqueous solution containing 208 g of 80% by mass DAA4 aqueous solution, 162 g of DAM1, 67

g of AAM, 0.018 g of N,N'-methylenebisacrylamide (MBA) serving as a crosslinking agent, and 210 g of water was added to the oil phase mixture, and emulsification was performed by stirring using a homogenizer. This was adjusted to 50°C under stirring, and nitrogen gas was bubbled for 30 minutes. Under a nitrogen gas stream, 1.0 g of a 4% by mass toluene solution of 2,2'-azobis(2-methylpropionamidine) dihydrochloride was added as a polymerization initiator, polymerization was performed at 45°C to 55°C for 8 hours, and a W/O emulsion type polymer (Polymer 1) was obtained.

(Synthesis Examples 2 to 9)

Respective W/O emulsion type polymers (Polymers 2 to 9) were obtained in the same manner as in Synthesis Example 1 except that the constitutional monomer, the crosslinking agent, and the polymerization initiator used as raw materials for synthesis in Synthesis Example 1 were changed to those shown in each Synthesis Example in the following Table 1.

[Table 1]

| Synthesis Example | 1 | 2 | 3 | 4 | 5 | 6 | 7 | 8 | 9 |
|---|---|---|---|---|---|---|---|---|---|
| Constitutional monomer [g] (lower column: mol%) | | | | | | | | | |
| DAM1 | 162 (35) | 76 (19) | 100 (21) | 120 (30) | 47 (10) | 46 (10) | 121 (35) | 96 (20) | 46 (10) |
| DAA4 (80% by mass aqueous solution) | 208 (31) | - | - | 139 (24) | 341 (50) | 270 (40) | 131 (26) | 280 (40) | 270 (40) |
| DAM4 (80% by mass aqueous solution) | - | 351 (56) | 277 (39) | 180 (29) | - | 72 (10) | 210 (39) | - | 72 (10) |
| AAM | 67 (34) | 43 (25) | 76 (39) | 29 (17) | 80 (40) | 79 (40) | - | 82 (40) | 79 (40) |
| Crosslinking agent [g] (lower column: mol%) | | | | | | | | | |
| N,N'-methylenebisacrylamide | 0.018 (0.0043) | 0.029 (0.0079) | 0.020 (0.0047) | 0.040 (0.0107) | - | - | 0.070 (0.0022) | - | 1.720 (0.4000) |
| Triallylamine | - | - | - | - | 0.097 (0.0250) | - | - | - | - |
| Ethoxylated isocyanuric acid triacrylate | - | - | - | - | - | 0.030 (0.0020) | - | - | - |
| Polymerization initiator [g] (4% by mass toluene solution) | | | | | | | | | |
| 2,2'-Azobis(2-methylpropionamidine) dihydrochloride | 1.0 | 1.0 | 1.0 | 1.0 | 1.0 | 1.0 | 1.0 | 1.0 | 1.0 |
| Solvent (pure water) [g] | 210 | 175 | 195 | 180 | 180 | 180 | 185 | 190 | 180 |

(Polymers 10 and 11)

As a commercially available W/O emulsion type polymer, the "Kurifix (registered trademark)" series manufactured by Kurita Water Industries, Ltd. was used. The compositions of the constitutional monomers are as shown in the following Table 2, respectively (Polymers 10 and 11).

<Intrinsic viscosity>

For each polymer, the intrinsic viscosity was determined according to the following procedures (i) to (v).

(i) Five Cannon-Fenske viscometers (No. 75 manufactured by Kusano Science Corp.) were immersed in a neutral detergent for glassware for one day or longer, washed thoroughly with water, and dried.
(ii) The W/O emulsion type polymer was diluted with water to prepare an aqueous solution having a polymer concentration of 0.2% by mass.
(iii) 50 mL of a 2 mol/L sodium nitrate aqueous solution was added to 50 mL of the 0.2% by mass aqueous solution prepared in (ii), and stirring was performed at 500 rpm for 20 minutes using a magnetic stirrer, to obtain a 1 mol/L sodium nitrate aqueous solution having a polymer concentration of 0.1% by mass. The obtained 1 mol/L sodium nitrate aqueous solution having a polymer concentration of 0.1% by mass was diluted with a 1·mol/L sodium nitrate aqueous solution, to prepare polymer solution samples having five polymer concentrations of 0.02%, 0.04%, 0.06%, 0.08%, and 0.1% by mass. Moreover, a 1 mol/L sodium nitrate aqueous solution to which the polymer was not added was used as a blank solution.
(iv) The five viscometers prepared in (i) were vertically mounted in a constant temperature water tank in which the temperature was adjusted to 30°C (within ± 0.02°C). 10 mL of the blank solution was added to each viscometer using a hollow pipette, and then allowed to stand for about 30 minutes to keep the temperature constant. Thereafter, a dropper stopcock was used to suck up the liquid and cause the liquid naturally drop, and the time it takes for the liquid to pass a marked line was measured to 1/100 second unit using a stopwatch. The measurement was repeated five times for each viscometer, and an average value was taken as a blank value (to).
(v) To the five viscometers that were used to perform the measurement of the blank solution, the polymer solution samples having five polymer concentrations prepared in (iii) were respectively added, 10 ml each, and then allowed to stand for about 30 minutes to keep the temperature constant. Thereafter, the same operation as in the measurement of the blank solution was repeated three times, and an average value of the passage time for each concentration was taken as a measured value (t).

A relative viscosity $\eta_{rel}$, a specific viscosity $\eta_{SP}$, and a reduced viscosity $\eta_{SP}/C$ [dL/g] were determined from the blank value to, the measured value t, and the concentration [mass/volume%] (= c [g/dL]) of the polymer solution sample according to relational expressions shown by the following Equations (II) and (III).

$$\eta_{rel} = t/t_0 \ldots (II)$$

$$\eta_{SP} = (t - t_0)/t_0 = \eta_{rel} - 1 \ldots (III)$$

From these values, the intrinsic viscosity [η] of each polymer was determined according to the method for determining the intrinsic viscosity based on the above-mentioned Huggins Equation.
The intrinsic viscosity [η] of each polymer is shown in the following Table 2.

[Table 2]

| | Composition (mol%) | | | | | | Intrinsic viscosity |
|---|---|---|---|---|---|---|---|
| | Cationic monomer | | | Nonionic monomer | Anionic monomer | Crosslinking agent | In 1 mol/L $NaNO_3$ (dL/g) |
| | Constitutional unit a | Constitutional unit b | | Constitutional unit c | | | |
| Synthesis Example 1 Polymer 1 | DAM1 (35) | DAA4 (31) | - | AAM (34) | - | MBA (0.0043) | 1.4 |
| Synthesis Example 2 Polymer 2 | DAM1 (19) | - | DAM4 (56) | AAM (25) | - | MBA (0.0079) | 16 |
| Synthesis Example 3 Polymer 3 | DAM1 (22) | - | DAM4 (39) | AAM (39) | - | MBA (0.0047) | 1.8 |
| Synthesis Example 4 Polymer 4 | DAM1 (30) | DAA4 (24) | DAM4 (29) | AAM (17) | - | MBA (0.0107) | 1.5 |
| Synthesis Example 5 Polymer 5 | DAM1 (10) | DAA4 (50) | - | AAM (40) | - | TAA (0.0250) | 4.0 |
| Synthesis Example 6 Polymer 6 | DAM1 (10) | DAA4 (40) | DAM4 (10) | AAM (40) | - | A9300 (0.0020) | 2.2 |
| Synthesis Example 7 Polymer 7 | DAM1 (35) | DAA4 (26) | DAM4 (39) | - | - | MBA (0.0022) | 1.5 |
| Synthesis Example 8 Polymer 8 | DAM1 (20) | DAA4 (40) | - | AAM (40) | - | - | 5.8 |
| Synthesis Example 9 Polymer 9 | DAM1 (10) | DAA4 (40) | DAM4 (10) | AAM (40) | - | MBA (0.4000) | 0.4 |
| Polymer 10 | - | DAA4 (60) | - | AAM (40) | - | MBA (0.0020) | 3.8 |
| Polymer 11 | - | DAA4 (40) | - | AAM (50) | AA (10) | MBA (0.0050) | 4.0 |

[Sludge]

The details of the sludge used in the evaluation test of the sludge dehydrating agent samples are shown in the following Table 3. The abbreviations and analysis methods (conforming to the sewerage testing method) for the respective items indicating the properties of sludge shown in Table 3 are as follows.

(1-1) Suspended solids (SS)

After 100 mL of sludge was weighed, the supernatant was removed by centrifugation at 3000 rpm for 10 minutes. The precipitate was poured into a weighed crucible while being washed with water, dried at a temperature in the range of 105°C to 110°C for 15 hours, and then weighed to determine the mass of the residue in the crucible after drying.

The proportion of the mass of the residue to the mass of 100 mL of sludge before drying was taken as the

content [% by mass] of suspended solids (SS) in 100 mL of sludge.

(1-2) Volatile suspended solids (VSS)

After the mass of the residue (SS) in the crucible was determined in (1-1), in a state of being placed in the crucible, the residue (SS) was ignited at a temperature in the range of 600°C ± 25°C for 2 hours, allowed to cool, and then weighed to determine the mass of the residue in the crucible after ignition.

A difference between the mass of the residue (SS) in the crucible before ignition and the mass of the residue in the crucible after ignition is the mass of volatile suspended solids (VSS) in 100 mL of sludge. The proportion of the mass of the residue (VSS) after ignition to the mass of SS was determined as the percentage content of VSS [% by mass/SS].

(1-3) Total solids (TS)

100 mL of sludge was weighed, placed in a weighed crucible, dried at a temperature in the range of 105°C to 110°C for 15 hours, and then weighed to determine the mass of the residue in the crucible after drying.

The proportion of the mass of the residue to the mass of 100 mL of sludge before drying was determined as the percentage content [% by mass] of the residue on evaporation (TS: total solids) in 100 mL of sludge.

(1-4) Volatile total solids (VTS )

After the mass of the residue (TS) in the crucible was determined in (1-3), in a state of being placed in the crucible, the residue (TS) was ignited at a temperature in the range of 600°C ± 25°C for 2 hours, allowed to cool, and then weighed to determine the mass of the residue in the crucible after ignition.

A difference between the mass of the residue (TS) in the crucible before ignition and the mass of the residue in the crucible after ignition is the mass of volatile total solids (VTS) in 100 mL of sludge. The proportion of the mass of the residue (VTS) after ignition to the mass of TS was determined as the percentage content of VTS [% by mass/TS].

(1-5) Fiber content

100 mL of sludge was filtered by a sieve of 100 mesh (opening: 149 μm), and the residue on the sieve was poured into a weighed crucible while being washed with water, dried at a temperature in the range of 105°C to 110°C for 15 hours, and then weighed to determine the mass of the residue in the crucible after drying.

Thereafter, in a state of being placed in the crucible, the residue was ignited at a temperature in the range of 600°C ± 25°C for 2 hours, allowed to cool, and then weighed to determine the mass of the residue in the crucible after ignition.

A difference between the mass of the residue in the crucible before ignition and the mass of the residue in the crucible after ignition is the mass of volatile suspended solids having a particle size of about 149 μm or more in 100 mL of sludge, and is mainly the mass of volatile fiber content. The proportion of the mass of the residue (volatile suspended solids having a particle size of about 149 μm or more) after ignition to the mass of SS was determined as the percentage content of fiber content [% by mass/SS].

(1-6) pH

The pH was measured in conformity with JIS Z 8802: 2011 based on the operation of the glass electrode method. Moreover, for pH calibration, commercially available pH standard solutions of a phthalate, a neutral phosphate, and a carbonate were used.

(1-7) Electrical conductivity

The electrical conductivity was measured in conformity with JIS K 0102: 2016.

[Table 3]

| Sludge | A | B | C |
|---|---|---|---|
| | Excess sludge from chemical factory | Excess sludge from food factory | Mixed sludge from sewage treatment plant |
| SS [% by mass] | 3.2 | 1.1 | 2.7 |
| VSS [% by mass/SS] | 67.5 | 92.5 | 91.3 |
| TS [% by mass] | 3.6 | 1.0 | 3.1 |
| VTS [% by mass/TS] | 64.2 | 86.9 | 89.4 |
| Fiber content [% by mass/SS] | 0.83 | 32.8 | 23.6 |
| pH | 6.4 | 4.7 | 5.2 |
| Electrical conductivity [mS/m] | 459 | 132 | 210 |

[Evaluation test of sludge dehydrating agent sample]

A sludge dehydrating evaluation test for various kinds of sludge was performed on the sludge dehydrating agent sample in which the polymer prepared above was used. The sludge dehydrating performance of the sludge dehydrating agent sample was evaluated by the following evaluation method.

(Example 1)

The W/O emulsion type polymer obtained in Synthesis Example 1 was diluted with water to prepare an aqueous solution having a polymer concentration of 0.2% by mass, and the prepared aqueous solution was used as Sludge dehydrating agent sample 1 (sludge dehydrating agent).

In a 300 mL beaker, 200 mL of Sludge A was collected, and Sludge dehydrating agent sample 1 was added so that the concentration of the polymer added was 400 mg/L. The mixture was stirred at 180 rpm for 30 seconds to form aggregated floes, and treated sludge was thus obtained.

(Examples 2 to 21 and Comparative Examples 1 to 12)

The sludge dehydrating agent was added to the sludge, aggregated floes were formed, and treated sludge was thus obtained in the same manner as in Example 1 except that the sludge, the sludge dehydrating agent, and the concentration of the sludge dehydrating agent added in Example 1 were changed as shown in the following Table 4.

<Evaluation method>

Each of the following items was evaluated for the sludge treated in Examples and Comparative Examples described above. The results of these evaluations are summarized in the following Table 4.

(2-1) Floc diameter

Among the aggregated flocs in the beaker, about 100 arbitrary pieces that could be observed from above the beaker were targeted, the maximum diameter of each aggregated floc was measured using a measure, and an average value of these measured maximum diameters was taken as the floc diameter.

The floc diameter is an index of the floc forming power of the sludge dehydrating agent. As the floc diameter is larger, it can be evaluated that coarser aggregated flocs are formed, and it can be said that the floc forming power of the sludge dehydrating agent is higher. However, in a case where the floc diameter is too large, the percentage of water content in cake to be described later tends to be high. The floe diameter is preferably 4.5 mm or more.

(2-2) Filtration amount for 20 seconds

A Büchner funnel (inner diameter: 80 mm, hole diameter: about 1 mm) was installed on a 200 mL graduated

cylinder. Next, a cylinder made of polyvinyl chloride having a diameter of 50 mm was installed on the upper side of the filtration surface of the Büchner funnel. The treated sludge was poured into the cylinder all at once, and the filtrate for 20 seconds from the start of pouring was collected in the graduated cylinder. The amount of the filtrate read from the scale of the graduated cylinder was taken as the filtration amount for 20 seconds.

The filtration amount for 20 seconds is an index of gravity filterability. As the filtration amount for 20 seconds is larger, it can be evaluated that aggregated flocs having superior gravity filterability are formed. However, it cannot be said that the treated sludge is dehydrated in a favorable state when the leakage amount of SS described later is large although the filtration amount for 20 seconds is large. Therefore, in the evaluation of the sludge dehydrating performance of a sludge dehydrating agent, it is necessary to judge the filtration amount for 20 seconds and the leakage amount of SS together. That is, it can be said that the sludge dehydrating agent is excellent in water filtering property when the filtration amount for 20 seconds is large and the leakage amount of SS is small.

(2-3) Leakage amount of SS

After the filtration amount for 20 seconds was measured in (2-2), the graduated cylinder was replaced with another graduated cylinder further 40 seconds later, and after 60 seconds from the start of pouring the treated sludge, the amount of the liquid collected through the hole of the Büchner funnel was read from the scale of the another graduated cylinder. The read liquid amount was taken as the leakage amount of SS.

The leakage amount of SS referred to herein is a numerical value serving as a guideline for the amount of suspended solids (SS) such as minute flocs which do not form a coarse aggregated floc or which are formed due to the collapse of a coarse aggregated floc in the treated sludge.

As the leakage amount of SS is smaller, it can be evaluated that firmer and coarser aggregated flocs are formed.

(2-4) Percentage of water content in cake

After the leakage amount of SS was measured in (2-3), the aggregated flocs remaining on the Büchner funnel were packed in a column made of polyvinyl chloride (inner diameter: 30 mm, height: 17.5 mm). The column was removed, and substantially circular massive aggregated flocs having a bottom surface of about 30 mm were squeezed from the top surface at 0.1 MPa for 60 seconds, to obtain a dehydrated cake.

The mass of the dehydrated cake and the mass of a dehydrated cake obtained by drying the dehydrated cake at 105°C for 15 hours were measured. A difference between the mass of the dehydrated cake before drying and the mass of the dehydrated cake after drying was regarded as the percentage of water content in the dehydrated cake. The proportion of the percentage of water content to the mass of the dehydrated cake before drying was determined as the percentage of water content in cake [% by mass].

In Sludge A and Sludge B in Table 3, when the percentage of water content in cake is less than 83% by mass, it can be evaluated that a dehydrated cake is obtained which has more favorable handleability as compared with the dehydrated cake obtained by the dehydrating treatment using a conventional sludge treatment agent. In addition, from the viewpoint such as handleability in the disposal and the like of dehydrated cake, it is more preferable as the percentage of water content in cake is lower. For example, when the percentage of water content in cake decreases from 85% by mass to 83% by mass, the amount of sludge generated can be decreased by 12% by mass. For this reason, when the percentage of water content in cake can be decreased, the amount of waste can be significantly decreased.

In Sludge C in Table 3, when the percentage of water content in cake is less than 75.5% by mass, it can be evaluated that a dehydrated cake is obtained which has more favorable handleability as compared with the dehydrated cake obtained by the dehydrating treatment using a conventional sludge treatment agent.

It should be noted that, in Comparative Examples 1, 2, 6, 9 and 10, the leakage amount of SS was too large, and it was difficult to obtain dehydrated cakes enough to determine the percentage of water content in cake (noted to be "unmeasurable" in Table 4).

[Table 4]

| | | | Sludge dehydrating agent sample (sludge dehydrating agent) | | | Floc diameter | Filtration amount for 20 | Leakage amount of SS | Percentage of water content in cake |
|---|---|---|---|---|---|---|---|---|---|
| | | Amount of sludge collected (mL) | Sample number | Kind of polymer | Addition concentration (mg/L) | (mm) | seconds (mL) | (mL) | (% by mass) |
| Example | 1 | Sludge A (200 mL) | 1 | Polymer 1 | 400 | 7 | 135 | 0 | 81.9 |
| | 2 | | 2 | Polymer 2 | 400 | 10 | 135 | 0 | 81.0 |
| | 3 | | 3 | Polymer 3 | 400 | 9 | 132 | 0 | 81.7 |
| | 4 | | 4 | Polymer 4 | 400 | 10 | 135 | 0 | 80.5 |
| | 5 | | 5 | Polymer 5 | 400 | 10 | 136 | 0 | 82.6 |
| | 6 | | 6 | Polymer 6 | 400 | 6 | 133 | 0 | 82.2 |
| | 7 | | 7 | Polymer 7 | 400 | 6 | 128 | 2 | 82.8 |
| Comparative Example | 1 | | 8 | Polymer 8 | 400 | 4 | 54 | 32 | Unmeasurable |
| | 2 | | 9 | Polymer 9 | 400 | 2 | 42 | 50 | Unmeasurable |
| | 3 | | 10 | Polymer 10 | 400 | 9 | 106 | 4 | 83.3 |
| | 4 | | 11 | Polymer 11 | 400 | 9 | 102 | 0 | 83.6 |
| Example | 8 | Sludge B (200 mL) | 1 | Polymer 1 | 80 | 8 | 164 | 0 | 81.9 |
| | 9 | | 2 | Polymer 2 | 80 | 7 | 162 | 0 | 81.6 |
| | 10 | | 3 | Polymer 3 | 80 | 8 | 162 | 0 | 82.1 |
| | 11 | | 4 | Polymer 4 | 80 | 6 | 164 | 0 | 81.5 |
| | 12 | | 5 | Polymer 5 | 80 | 9 | 168 | 0 | 82.4 |
| | 13 | | 6 | Polymer 6 | 80 | 6 | 162 | 0 | 82.3 |
| | 14 | | 7 | Polymer 7 | 80 | 6 | 160 | 2 | 82.6 |
| Comparative Example | 5 | | 8 | Polymer 8 | 80 | 6 | 111 | 45 | 84.2 |

(continued)

| | | Amount of sludge collected (mL) | Sludge dehydrating agent sample (sludge dehydrating agent) | | | Floc diameter | Filtration amount for 20 | Leakage amount of SS | Percentage of water content in cake |
|---|---|---|---|---|---|---|---|---|---|
| | | | Sample number | Kind of polymer | Addition concentration (mg/L) | (mm) | seconds (mL) | (mL) | (% by mass) |
| | 6 | | 9 | Polymer 9 | 80 | 2 | 52 | 78 | Unmeasurable |
| | 7 | | 10 | Polymer -_ 10 | 80 | 9 | 159 | 0 | 83.1 |
| | 8 | | 11 | Polymer 11 | 80 | 11 | 160 | 0 | 83.0 |
| Example | 15 | Sludge C (200 mL) | 1 | Polymer 1 | 100 | 7 | 176 | 0 | 73.5 |
| | 16 | | 2 | Polymer 2 | 100 | 6 | 175 | 0 | 72.6 |
| | 17 | | 3 | Polymer 3 | 100 | 5 | 172 | 0 | 73.6 |
| | 18 | | 4 | Polymer 4 | 100 | 6 | 168 | 0 | 73.1 |
| | 19 | | 5 | Polymer 5 | 100 | 7 | 166 | 0 | 74.3 |
| | 20 | | 6 | Polymer 6 | 100 | 6 | 164 | 0 | 74.0 |
| | 21 | | 7 | Polymer 7 | 100 | 5 | 160 | 0 | 75.1 |
| Comparative Example | 9 | | 8 | Polymer 8 | 100 | 6 | 85 | 42 | Unmeasurable |
| | 10 | | 9 | Polymer 9 | 100 | 2 | 44 | 40 | Unmeasurable |
| | 11 | | 10 | Polymer 10 | 100 | 6 | 122 | 20 | 76.1 |
| | 12 | | 11 | Polymer | 100 | 8 | 158 | 2 | 75.9 |

As can be seen from the results shown in Table 4, according to the sludge dehydrating agent of the present invention containing a cationic polymer having an intrinsic viscosity within a predetermined range, the floc diameter, filtration amount for 20 seconds, leakage amount of SS, and percentage of water content in cake in the treated sludge are all favorable. That is, it has been confirmed that the sludge dehydrating agent of the present invention is superior in sludge dehydrating performance.

## Claims

1. A sludge dehydrating agent, comprising a cationic polymer which comprises:

   a constitutional unit a derived from a primary amine salt represented by the following Formula (al); and
   a constitutional unit b derived from a quaternary ammonium salt represented by the following Formula (b1),
   wherein an intrinsic viscosity of the cationic polymer at 30°C in a 1 mol/L sodium nitrate aqueous solution is 0.5 to 4.5 dL/g:

   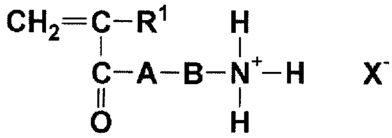 ・・・(a 1)

   (in Formula (a1), $R^1$ is a hydrogen atom or a methyl group, A is an oxygen atom or $-NR^9-$, where $R^9$ is a hydrogen atom or an alkyl group having 1 to 3 carbon atoms, B is an alkylene group having 2 to 4 carbon atoms, and $X^-$ is an anion),

   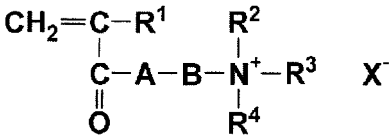 ・・・(b 1)

   (in Formula (b1), $R^1$ is a hydrogen atom or a methyl group, $R^2$ and $R^4$ are each independently an alkyl group having 1 to 3 carbon atoms, $R^3$ is a hydrogen atom, an alkyl group having 1 to 3 carbon atoms, or a benzyl group, A is an oxygen atom or $-NR^9-$, where $R^9$ is a hydrogen atom or an alkyl group having 1 to 3 carbon atoms, B is an alkylene group having 2 to 4 carbon atoms, and $X^-$ is an anion).

2. The sludge dehydrating agent according to claim 1, wherein a sum of the constitutional unit a and the constitutional unit b is 50 mol% or more and 100 mol% or less with respect to 100 mol% of a sum of monomer units that are constitutional units of the cationic polymer.

3. The sludge dehydrating agent according to claim 1 or 2, wherein the cationic polymer further has a constitutional unit c derived from a nonionic monomer.

4. The sludge dehydrating agent according to claim 3, wherein

   the constitutional unit a is 10 mol% or more and less than 100 mol% with respect to 100 mol% of a sum of monomer units that are constitutional units of the cationic polymer,
   the constitutional unit b is more than 0 mol% and 60 mol% or less with respect to 100 mol% of a sum of monomer units that are constitutional units of the cationic polymer, and
   the constitutional unit c is more than 0 mol% and 50 mol% or less with respect to 100 mol% of a sum of monomer units that are constitutional units of the cationic polymer.

5. The sludge dehydrating agent according to any one of claims 1 to 4, which comprises a crosslinking agent, wherein an amount of the crosslinking agent added is 0.001 mol% or more and 1 mol% or less with respect to 100 mol% of a sum of monomer units that are constitutional units of the cationic polymer.

6. A sludge dehydrating method, in which the sludge dehydrating agent according to any one of claims 1 to 5 is added

to sludge, to dehydrate the sludge.

**INTERNATIONAL SEARCH REPORT**

International application No.
PCT/JP2020/045234

A. CLASSIFICATION OF SUBJECT MATTER
Int.Cl. B01D21/01(2006.01)i, C08F220/34(2006.01)i, C08F220/56(2006.01)i, C08F220/60(2006.01)i, C02F11/147(2019.01)i
FI: C02F11/147ZAB, B01D21/01107A, B01D21/01101A, C08F220/34, C08F220/56, C08F220/60
According to International Patent Classification (IPC) or to both national classification and IPC

B. FIELDS SEARCHED
Minimum documentation searched (classification system followed by classification symbols)
Int.Cl. B01D21/01, C08F220/34, C08F220/56, C08F220/60, C02F11/147

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
JSTPlus/JMEDPlus/JST7580(JDreamIII), Japio-GPG/FX

C. DOCUMENTS CONSIDERED TO BE RELEVANT

| Category* | Citation of document, with indication, where appropriate, of the relevant passages | Relevant to claim No. |
|---|---|---|
| X | JP 2005-213343 A (TOMOOKA KAKEN KK) 11 August 2005 (2005-08-11), claims 1-11, paragraphs [0001]-[0125] | 1-6 |
| A | JP 07-256299 A (NIPPON GESUIDO JIGYODAN) 09 October 1995 (1995-10-09), claim 1 | 1-6 |
| A | JP 2005-230739 A (SANYO CHEMICAL IND LTD.) 02 September 2005 (2005-09-02), claims 1-11 | 1-6 |
| A | WO 2018/168447 A1 (KURITA WATER INDUSTRIES LTD.) 20 September 2018 (2018-09-20), claims 1-5 | 1-6 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 January 2021 | 02 February 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/045234

C (Continuation). DOCUMENTS CONSIDERED TO BE RELEVANT

| Category* | Citation of document, with indication, where appropriate, of the relevant passages | Relevant to claim No. |
|---|---|---|
| A | JP 2017-209651 A (KURITA WATER INDUSTRIES LTD.) 30 November 2017 (2017-11-30), claims 1-3 | 1-6 |
| A | JP 2017-205748 A (KURITA WATER INDUSTRIES LTD.) 24 November 2017 (2017-11-24), claims 1-7 | 1-6 |
| A | WO 2018/109279 A1 (KEMIRA, OYJ) 21 June 2018 (2018-06-21), claims 1-17 | 1-6 |

Form PCT/ISA/210 (second sheet) (January 2015)

**INTERNATIONAL SEARCH REPORT**
Information on patent family members

International application No.
PCT/JP2020/045234

| | | |
|---|---|---|
| JP 2005-213343 A | 11 August 2005 | (Family: none) |
| JP 07-256299 A | 09 October 1995 | (Family: none) |
| JP 2005-230739 A | 02 September 2005 | (Family: none) |
| WO 2018/168447 A1 | 20 September 2018 | US 2019/0375665 A1<br>claims 1-5<br>EP 3597609 A1<br>CN 110337421 A<br>KR 10-2019-0124710 A<br>TW 201834976 A |
| JP 2017-209651 A | 30 November 2017 | (Family: none) |
| JP 2017-205748 A | 24 November 2017 | (Family: none) |
| WO 2018/109279 A1 | 21 June 2018 | US 2019/0276578 A1<br>claims 1-20<br>EP 3555364 A1<br>CA 3042966 A1<br>AU 2017378210 A1<br>CN 110088397 A<br>KR 10-2019-0091446 A |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019221221 A
- JP 2015057275 A
- JP 2013154287 A